(19)

**Europäisches Patentamt**
**European Patent Office**
**Office européen des brevets**

(11) **EP 1 865 606 A1**

(12) **EUROPEAN PATENT APPLICATION**
published in accordance with Art. 158(3) EPC

(43) Date of publication:
**12.12.2007 Bulletin 2007/50**

(51) Int Cl.:
*H04B 1/04* (2006.01)          *H04Q 7/38* (2006.01)

(21) Application number: **06745571.7**

(22) Date of filing: **21.04.2006**

(86) International application number:
**PCT/JP2006/308440**

(87) International publication number:
**WO 2006/118055 (09.11.2006 Gazette 2006/45)**

(84) Designated Contracting States:
**DE FR GB**

(30) Priority: **27.04.2005 JP 2005130538**

(71) Applicant: **MATSUSHITA ELECTRIC INDUSTRIAL CO., LTD.**
**Osaka 571-8501 (JP)**

(72) Inventors:
• **HARA, Yoshihiro**
**Matsushita Electric Industrial Co., Ltd.**
**2-1-61, Shiromi, Chuo-ku**
**Osaka 540-6207 (JP)**
• **MORIMOTO, Shigeru**
**Matsushita Electric Industrial Co., Ltd.**
**2-1-61, Shiromi, Chuo-ku**
**Osaka 540-6207 (JP)**

• **MATSUURA, Toru**
**Matsushita Electric Industrial Co., Ltd.**
**2-1-61, Shiromi, Chuo-ku**
**Osaka 540-6207 (JP)**
• **ADACHI, Hisashi**
**Matsushita Electric Industrial Co., Ltd.**
**2-1-61, Shiromi, Chuo-ku**
**Osaka 540-6207 (JP)**
• **ISHIDA, Kaoru**
**Matsushita Electric Industrial Co., Ltd.**
**2-1-61, Shiromi, Chuo-ku**
**Osaka 540-6207 (JP)**

(74) Representative: **Grünecker, Kinkeldey, Stockmair & Schwanhäusser**
**Anwaltssozietät**
**Maximilianstrasse 58**
**80538 München (DE)**

(54) **RADIO TRANSMITTING APPARATUS, POLAR MODULATION TRANSMITTING APPARATUS AND WIRELESS COMMUNICATION APPARATUS**

(57)    A wireless transmission apparatus of multi-mode operation with superior power efficiency is provided. Switches (115 and 117) are switched over in such a manner that a modulation signal outputted from a wireless GSM/EDGE (UB) signal formation circuit (101-3) of a high-frequency signal processing circuit (101) is outputted to a high-frequency power amplifier (104) at the time of output of a GSM modulation signal, and is outputted to a high-frequency amplifier (105) at the time of output of an EDGE modulation signal. As a result, the EDGE modulation signal is power amplified using a high-frequency power amplifier (105) for an UMTS modulation signal use that is compatible with regards to the EDGE modulation signal and the maximum output power and presence or absence of envelope fluctuation. It is therefore possible to amplify the EDGE modulation scheme wireless signal with high efficiency.

FIG.3

EP 1 865 606 A1

**Description**

Technical Field

The present invention relates to wireless transmission apparatus, polar modulation transmission apparatus, and wireless communication apparatus capable of transmitting wireless signals of a plurality of schemes such as a GSM modulation scheme, EDGE modulation scheme and UMTS modulation scheme.

Background Art

Conventionally, in recent years, several different communication schemes have existed in the world as communication schemes for mobile telephones. However, against the backdrop of a dramatic worldwide growth in mobile telephones in recent years, demand for so-called multi-mode terminals compatible with a number of communication schemes rather than a single communication scheme has dramatically increased.

A multi-mode communication scheme enabling both a UMTS modulation scheme and GSM-EDGE modulation scheme may be given as an example of a multi-mode communication scheme. The UMTS (Universal Mobile Telecommunications System) scheme is one of the third generation (3G) mobile communication systems and is a communication scheme adopted primarily in Europe and Japan (W-CDMA). Further, the GSM (Global System for Mobile Communications) scheme is an international standard system for implementing digital mobile telephones utilized in over one hundred countries centering on Europe and Asia utilizing frequency bands of 850MHz, 900MHz, 1.8GHz and 1.9GHz, etc. Further, an EDGE (Enhanced Data GSM Environment) modulation scheme is data transmission technology using a GSM scheme mobile telephone network, handled as one of the 3G technologies that is a successor technology to the GPRS (General Packet Radio Service) modulation scheme.

Products incorporating multi-mode mobile terminals capable of communication using both modulations schemes of the UMTS modulation scheme and the GSM-EDGE modulation scheme described above are already in existence and are disclosed, for example, in the press release (hereinafter referred to as "Non-Patent Document 1").

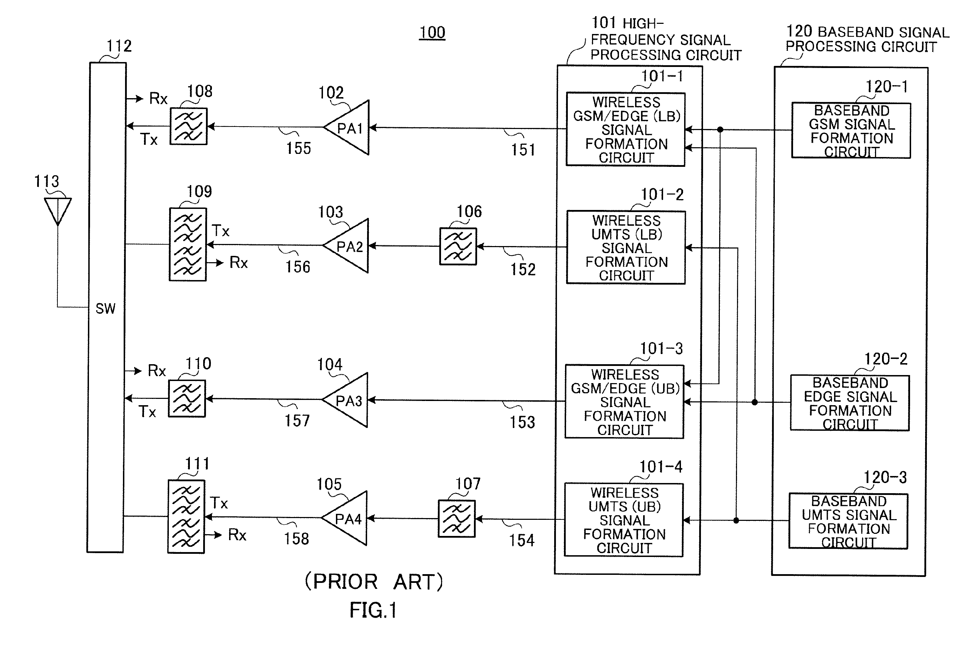

An example configuration for a transmission system for a multi-mode mobile telephone compatible with the UMTS and GSM/EDGE schemes of the related art is shown in FIG.1. Multi-mode mobile telephone 100 is such that at baseband GSM signal formation circuit 120-1, baseband EDGE signal formation circuit 120-2, and baseband UMTS signal formation circuit 120-3 of baseband signal processing circuit 120, by carrying out digital modulation processing and frame assembly corresponding to each scheme, baseband GSM signals, EDGE signals and UMTS signals are formed and sent to high-frequency signal processing circuit 101.

High-frequency signal processing circuit 101 forms a wireless signal by modulating a high-frequency carrier signal using the baseband GSM signal, EDGE signal and UMTS signal. Specifically, high-frequency signal processing circuit 101 has wireless GSM/EDGE (LB) signal formation circuit 101-1, wireless UMTS (LB) signal formation circuit 100-2, wireless GSM/EDGE (UB) signal formation circuit 101-3, and wireless UMTS (UB) signal formation circuit 101-4. High-frequency carrier signals of different frequencies are then modulated using base band signals corresponding to the names of each circuit 101-1 to 101-4. This modulation can be carried out as, for example, orthogonal modulation. One signal line going from baseband signal processing circuit 120 to high-frequency signal processing circuit 101 is configured from an I signal (in-phase signal) and a Q signal (orthogonal signal) respectively. In the event that orthogonal modulation is carried out at each circuit 101-1 to 101-4, carrier waves mutually differing in phase by 90 degrees are added after modulation by the I signal (in-phase signal) and the Q signal. LB indicates a low-frequency band and UB indicates a high-frequency band.

Wireless GSM/EDGE(LB) signal 151, wireless UMTS(LB) signal 152, wireless GSM/EDGE (UB) signal 153, and wireless UMTS (UB) signal 154 are respectively power amplified by corresponding high-frequency power amplifiers 102, 103, 104 and 105.

Here, each of the high-frequency power amplifiers 102, 103, 104 and 105 are individually optimally designed for the modulation schemes and operating frequencies of the inputted wireless signals. Namely, high-frequency power amplifier 102 is optimally designed for use with GSM-EDGE modulation scheme low-frequencybands (LB), high-frequency power amplifier 103 is optimally designed for use with UMTS modulation scheme low-frequency bands (LB), high-frequency power amplifier 104 is optimally designed for use with GSM/EDGE modulation scheme high-frequency bands (UB), and high-frequency power amplifier 105 is optimally designed for use with UMTS modulation scheme high-frequency bands (UB).

Bandbass filters 106, 107 are provided between wireless UMTS (LB) signal formation circuit 101-2 and high-frequency power amplifier 103, and between wireless UMTS (UB) signal formation circuit 101-4 and high-frequency power amplifier 105. Reception band noise of the UMTS modulation scheme is then cut off by each of the band pass filters 106 and 107. Bandpass filters for the same purpose are not necessary with the GSM modulation scheme because of the circuit type of the wireless GSM/EDGE signal formation circuits 101-1 and 101-3.

Low-pass filters 108 and 110 for suppressing high-frequency spurious components are provided at the output side of high-frequency power amplifiers 102 and 104 for GSM/EDGE modulation scheme use. With the GSM/EDGE modulation scheme, transmission (Tx) and reception (Rx) can be switched over with time by antenna switch 112 (TDD scheme).

On the other hand, UMTS modulation schemes consist of code multiplexing (CDMA) schemes where transmission and reception are carried out at the same time, and schemes (FDD schemes) where transmission and reception are divided by frequency. Because of this, duplexers 109 and 111 configured from two band-pass filters corresponding to the respective bands for transmitting and receiving are provided at the latter stages of high-frequency power amplifiers 103 and 105. Duplexers 109 and 111 are connected to antenna 113 via antenna switch 112.

As described above, data communication using the EDGE modulation scheme is associated with a GSM modulation scheme of the mobile telephone scheme. Because of this, the EDGE modulation scheme shares the same high-frequency power amplifiers 102 and 104 as the GSM modulation scheme.

Patent Document 1: October 19, 2004 by Nokia Japan Co. Ltd.

Disclosure of Invention

Problems to be Solved by the Invention

However, with the wireless transmission apparatus of the related art described above, the problems described below are encountered from the viewpoint of power efficiency of the EDGE modulation scheme.

First, the GSMmodulation scheme is a frequency (phase) modulation scheme. Therefore, with regards to modulation schemes where the envelope of a high-frequency modulation wave does not change with time (at the same output power setting), the edge modulation scheme is a vector (IQ) modulation scheme, and is a modulation scheme where the envelope of the high-frequency modulation wave changes with time (even for the same output power settings) . It is therefore necessary to make high-frequency power amplifiers 102 and 104 operate in a linear manner in order to amplify a high-frequency modulation wave with an envelope that changes minute by minute without distortion. In order to achieve this, it is necessary for the high-frequency power amplifier to be a so-called A-class amplifier. In A-class operation, the linearity of the operation is superior but power due to the bias current is always consumed and power efficiency is therefore low.

Further, a maximum value (for example, 27dBm for an 850MHz band and power class: E2) of this output power level in an EDGE modulation scheme is extremely small compared with a maximum value (for example, 33dBm for an 850MHz band and power class: 4) (refer to 3GPP (3rd Generation Partnership Project) standard) of an output power level in the GSM modulation scheme. Design of a high-frequency power amplifier is therefore such that saturation power of the high-frequency power amplifier is in the order of the maximum power occurring in the GSM modulation scheme.

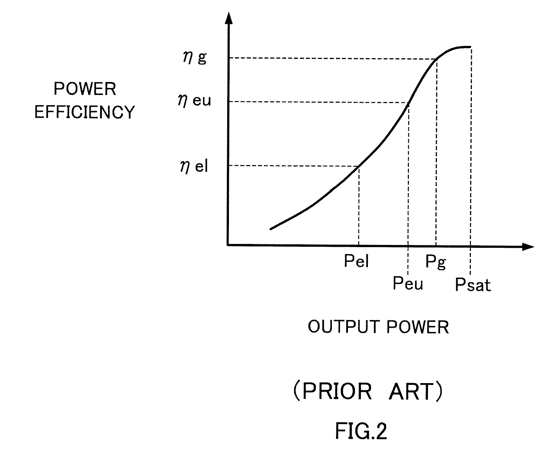

An example of an output power and power efficiency characteristic occurring at the high-frequency power amplifier is shown in FIG.2. As shown, power efficiency becomes higher together with increase in output power and a maximum efficiency is shown in the vicinity of saturation power.

A description of the reason power efficiency falls using EDGE is given using FIG. 2. With the GSM scheme, use takes place at the points (Pg and ηg) of high-efficiency where maximum output is large (one point is used in the above drawing because the modulation wave is a constant envelope signal). On the other hand, with the EDGE scheme, the maximum output is small compared with GSM and the envelope of the modulation wave fluctuates. Use therefore takes place at a point (Peu to Pel and neu to ηel) of a relatively low efficiency and power efficiency therefore falls.

This means that, for the two reasons described above, only low values in the order of 20% can be obtained for power efficiency with the EDGE modulation scheme in the related art.

It is therefore an object of the present invention to improve power efficiency at the time of transmission of EDGE modulation scheme signals in multi-mode compatible wireless transmission apparatus, polar transmission apparatus and wireless communication apparatus that power amplify and wirelessly transmit GSM modulation scheme, EDGE modulation scheme and UMTS modulation scheme signals.

Means for Solving the Problem

One aspect of a wireless transmission apparatus of the present invention adopts a configuration where wireless transmission apparatus power amplifies and wirelessly transmits GSM modulation scheme, EDGE modulation scheme and UMTS modulation scheme signals, and employs a configuration having a high-frequency signal processing circuit that forms GSM modulation scheme, EDGE modulation scheme and UMTS modulation scheme wireless signals, a first high-frequency power amplifier that power amplifies the GSM modulation scheme wireless signal, and a second high-frequency power amplifier that power amplifies the UMTS modulation scheme and EDGE modulation scheme wireless signals.

According to this configuration, an EDGE modulation scheme wireless signal is power amplified using a high-frequency power amplifier for UMTS modulation scheme wireless signal use that is compatible with regards to the EDGE modulation scheme wireless signal and the maximum output power and presence or absence of envelope fluctuation. It is therefore possible to amplify the EDGE modulation scheme wireless signal with high efficiency.

An aspect of wireless transmission apparatus of the present invention adopts a configuration where the first high-frequency power amplifier is made to perform an amplification operation in a non-linear region, and the second high-frequency power amplifier is made to perform an amplification operation in a linear region.

According to this configuration, with a GSM modulation scheme wireless signal where an envelope does not fluctuate, a high-frequency power amplifier is made to operate in a non-linear region (saturation region), while on the other hand, with the UMTS modulation scheme and EDGE modulation scheme wireless signal where the envelope fluctuates, a high-frequency power amplifier is made to operate in a linear region. It is therefore possible to apply the performance of power amplification of a high efficiency to each modulation scheme.

In an aspect of the wireless transmission apparatus of the present invention, a configuration is adopted where the high-frequency power amplifier that power amplifies the EDGE modulation scheme wireless signal is switched from the second high-frequency power amplifier to the first high-frequency power amplifier according to the output power level of the wireless signal of the EDGE modulation scheme outputted from the second high-frequency power amplifier.

According to this configuration, it is therefore possible to form EDGE modulation scheme wireless signals using the first high-frequency power amplifier even in cases where the second high-frequency power amplifier is designed in such a manner that the maximum output power level of the second high-frequency power amplifier matches the maximum output power level of the UMTS modulation scheme wireless signal.

An aspect of a wireless transmission apparatus of the present invention adopts a configuration where a high-frequency modulation signal output terminal of the high-frequency signal processing circuit is such that an output terminal is shared by the EDGE modulation signal and UMTS modulation signal, and the GSM modulation signal is outputted from a separate output terminal.

According to this configuration, since the external switch of the high-frequency signal processing circuit is no longer necessary, the size of the apparatus can be made small, and low cost can be achieved.

In an aspect of a wireless transmission apparatus of the present invention, a configuration is adopted where a high-frequency modulation signal output terminal of the high-frequency signal processing circuit is shared by the GSM modulation signal and the EDGE modulation signal and the UMTS modulation signal is outputted from a separate output terminal, and the wireless transmission apparatus further employs a configuration having a first switch that inputs signals outputted from the shared output terminal for the GSM modulation signal and the EDGE modulation signal and outputs the GSM modulation signal to the first high-frequency power amplifier side and then outputs the EDGE modulation signal to the second high-frequency power amplifier side, and a second switch that inputs the UMTS modulation signal outputted using an output terminal separate from the shared output terminal and the EDGE modulation signal outputted by the first switch and selects either one of the modulation signals for output to the second high-frequency power amplifier.

According to this configuration, the high-frequency power amplifier can be shared by the UMTS modulation scheme wireless signal and the EDGE modulation scheme wireless signal, and power efficiency for the EDGE modulation scheme wireless signal can be improved.

An aspect of a wireless transmission apparatus of the present invention adopts a configuration wherein a high-frequency modulation signal output terminal of the high-frequency signal processing circuit is shared by the GSM modulation signal and the EDGE modulation signal, and the UMTS modulation signal is outputted from a separate output terminal, and the wireless transmission apparatus employs a configuration having a first switch, that inputs signals outputted from the shared output terminal for the GSM modulation signal and the EDGE modulation signal, and outputs the GSM modulation signal to the first high-frequency power amplifier side and selectively outputs the EDGE modulation signal to the first high-frequency power amplifier side or the second high-frequency power amplifier side, and a second switch, that inputs the UMTS modulation signal outputted by an output terminal separate from the shared output terminal and the EDGE modulation signal outputted by the first switch, and selects either one of the modulation signals for output to the second high-frequency power amplifier.

According to this configuration, the high-frequency power amplifier can be shared by the UMTS modulation scheme wireless signal and the EDGE modulation scheme wireless signal, and power efficiency for the EDGE modulation scheme wireless signal can be improved. In addition, the EDGE modulation signal is selectively outputted to the first high-frequency power amplifier side or second high-frequency power amplifier side by the first switch. The extent of the power increase resulting from amplification of the EDGE modulation signal by the second high-frequency power amplifier is therefore coupled with the extent of power loss due to the EDGE modulation signal passing through the second switch so that the EDGE modulation signal can be selectively amplified by the first high-frequency power amplifier or amplified by the second high-frequency power amplifier so as to enable a substantial decrease in power consumption.

An aspect of a wireless transmission apparatus of the present invention comprises an output switching switch connected to a latter stage of the first and second high-frequency amplifiers, a duplexer connected to the latter stage of the output switching switch, and a low-pass filter connected to the latter stage of the output switching switch, wherein the output switching switch inputs output signals of the first and second high-frequency power amplifiers and outputs the output signal to the duplexer or the low-pass filter according to the modulation scheme of the output system.

According to this configuration, in the event that the high-frequency power amplifier is shared by the EDGE modulation scheme wireless signal and the UMTS modulation scheme wireless signal, even in case that frequency bands between these modulation schemes are different, it is not necessary to increase duplexers or low-pass filters of the latter stage of the high-frequency power amplifier and increases in apparatus size and cost can therefore be prevented.

An aspect of polar modulation transmission apparatus of the present invention comprises a high-frequency signal processing circuit that forms amplitude signals and high-frequency phase modulation signals for signals of each of the modulation schemes from GSM modulation scheme, EDGE modulation scheme, and UMTS modulation scheme baseband signals, a first high-frequency power amplifier that takes a voltage corresponding to the amplitude signal of the GSM modulation scheme signal as a power supply voltage and power amplifies a high-frequency phase modulation signal for the GSM modulation scheme signal, and a second high-frequency power amplifier that takes a voltage corresponding to the amplitude signals of the UMTS modulation scheme and EDGE modulation scheme signals as a power supply voltage and power amplifies a high-frequency phase modulation signal for the UMTS modulation scheme and EDGE modulation scheme signals.

According to this configuration, it is also possible to carry out power amplification of UMTS modulation scheme and EDGE modulation scheme signals using a non-linear high-frequency power amplifier and it is therefore possible to substantially increase power efficiency from that of the wireless transmission apparatus described above. Further, this has the advantages that power supply voltage can be made to be a fixed value corresponding to transmission power for a GSM modulation scheme-dedicated high-frequency power amplifier, and an amplitude signal amplifier for the polar modulation scheme can be made to be narrow band.

In an aspect of the polar modulation transmission apparatus of the present invention, a configuration is adopted where the high-frequency power amplifier that power amplifies the EDGE modulation scheme high-frequency phase modulation signal is switched from the second high-frequency power amplifier to the first high-frequency power amplifier according to the output power level of the high-frequency phase modulation signal of the EDGE modulation scheme outputted from the second high-frequency power amplifier.

According to this configuration, it is therefore possible to form EDGE modulation scheme wireless signals using the first high-frequency power amplifier even in cases where the second high-frequency power amplifier is designed in such a manner that the maximum output power level of the second high-frequency power amplifier matches the maximum output power level of the UMTS modulation scheme wireless signal.

An aspect of wireless communication apparatus of the present invention comprises any of the wireless transmission apparatus described above, reception apparatus that demodulates reception signals, an antenna, and a transmission/reception switching section switching between supplying a transmission signal from the wireless transmission section to the antenna, and supplying a reception signal from the antenna to the reception apparatus. Further, an aspect of wireless communication apparatus of the present invention comprises polar modulation transmission apparatus described above, reception apparatus that demodulates reception signals, an antenna, and a transmission/reception switching section switching between supplying a transmission signal from the wireless transmission apparatus to the antenna, and supplying a reception signal from the antenna to the reception apparatus.

According to this configuration, as the power efficiency of the transmission apparatus is high, it is possible to extend the usage time of the mounted battery supply and make the high-frequency power amplifier of the transmission apparatus small. This makes it possible to make the wireless transmission apparatus substantially smaller.

Advantageous Effect of the Invention

According to the present invention, it is possible to implement wireless transmission apparatus, polar modulation transmission apparatus, and wireless communication apparatus capable of raising power efficiency at the time of transmission of an EDGE modulation scheme signal.

Brief Description of Drawings

FIG.1 is a block view showing an example configuration of wireless transmission apparatus capable of transmitting using both the UMTS modulation scheme and the GSM/EDGE modulation scheme of the related art;

FIG.2 is a view showing the relationship between output power and power efficiency of a high-frequency power amplifier;

FIG.3 is a block view showing a configuration for a wireless transmission apparatus according to Embodiment 1 of the present invention;
FIG.4 is a block view showing a configuration for a high-frequency signal processing circuit;
FIG. 5 is a view showing an operating state of a switch provided at wireless transmission apparatus according to Embodiment 1;
FIG.6 is a block view showing a configuration for polar modulation transmission apparatus according to Embodiment 2 of the present invention;
FIG.7 is a block view showing a configuration for a high-frequency signal processing circuit; and
FIG.8 is a block view showing an outline configuration of wireless communication apparatus.

Best Mode for Carrying Out the Invention

The following is a detailed description with reference to the drawings of preferred embodiments of the present invention.

(Embodiment 1)

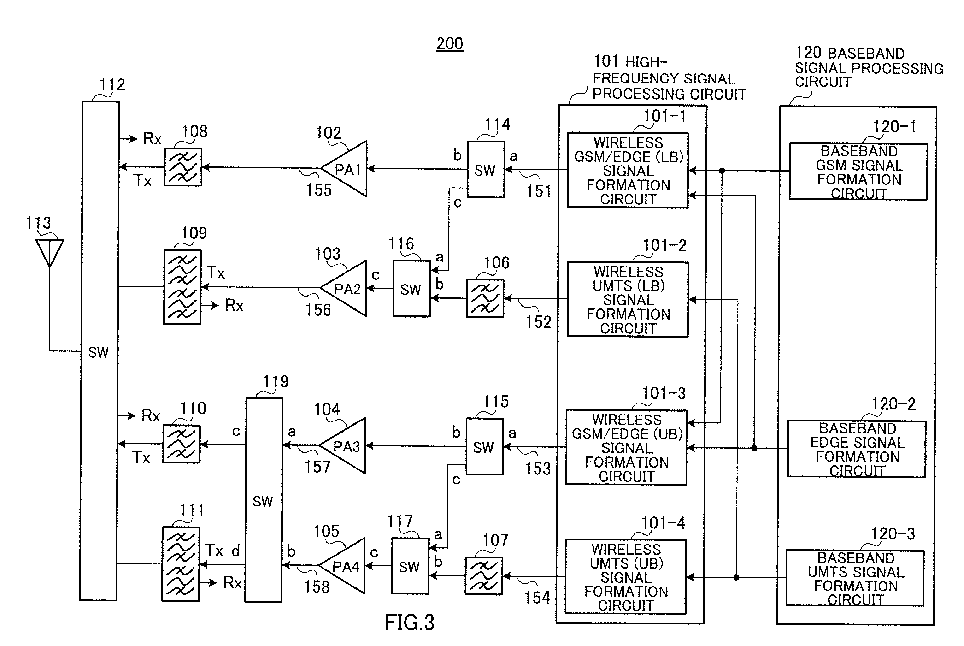

A configuration for a wireless transmission apparatus according to Embodiment 1 of the present invention is shown in FIG.3. In FIG.3, blocks having the same functions as in FIG.1 are given the same reference numerals and description thereof is omitted.

Wireless transmission apparatus 200 is a so-called multi-mode compatible wireless transmission apparatus for wirelessly transmitting GSM modulation scheme, EDGE modulation scheme and UMTS modulation scheme signals.

The transmission frequency range of wireless transmission apparatus 200 of this embodiment is 824 to 849 MHz at low-frequency bands (LB) for either of the GSM/EDGE and UMTS modulation schemes but at high-frequency bands (UB) the transmission frequency range is 1710 to 1785 for GSM/EDGE modulation schemes and 1850 to 1910MHz (refer to 3GPP standard) for UMTS modulation schemes.

Wireless transmission apparatus 200 has a one input/two outputs switching switch 114 for sorting, of wireless GSM/EDGE (LB) signal 151 outputted by wireless GSM/EDGE (LB) signal formation circuit 101-1, wireless GSM (LB) signals to high-frequency power amplifier 102, and wireless EDGE (LB) signals to high-frequency power amplifier 103.

Further, wireless transmission apparatus 200 has a one input/two outputs switching switch 115 for sorting, of wireless GSM/EDGE (UB) signal 153 outputted by wireless GSM/EDGE (UB) signal formation circuit 101-3, wireless GSM (UB) signals to high-frequency power amplifier 104, and wireless EDGE (UB) signals to high-frequency power amplifier 105.

Moreover, wireless transmission apparatus 200 has switching switch 116 taking wireless EDGE (LB) signal sorted by switching switch 114 and wireless UMTS (LB) signal 152 formed by wireless UMTS (LB) signal formation circuit 101-2 as input and selecting one of these signals for output to high-frequency power amplifier 103, and switching switch 117 taking a wireless EDGE (UB) signal sorted by switching switch 115 and a wireless UMTS (UB) signal 154 formed by wireless UMTS (UB) signal formation circuit 101-4 as input, and selecting one of these signals for output to high-frequency power amplifier 105.

Further, wireless transmission apparatus 200 has switch 119 taking output signal 157 of high-frequency power amplifier 104 and output signal 158 of high-frequency power amplifier 105 as input and switching over these paths for output to low-pass filter 110 and duplexer 111.

In the case of this embodiment, wireless GSM/EDGE (LB) signal formation circuit 101-1, wireless UMTS (LB) signal formation circuit 101-2, wireless GSM/EDGE (UB) signal formation circuit 101-3, and wireless UMTS (UB) signal formation circuit 101-4 of high-frequency signal processing circuit 101 form wireless signals using orthogonal modulation schemes.

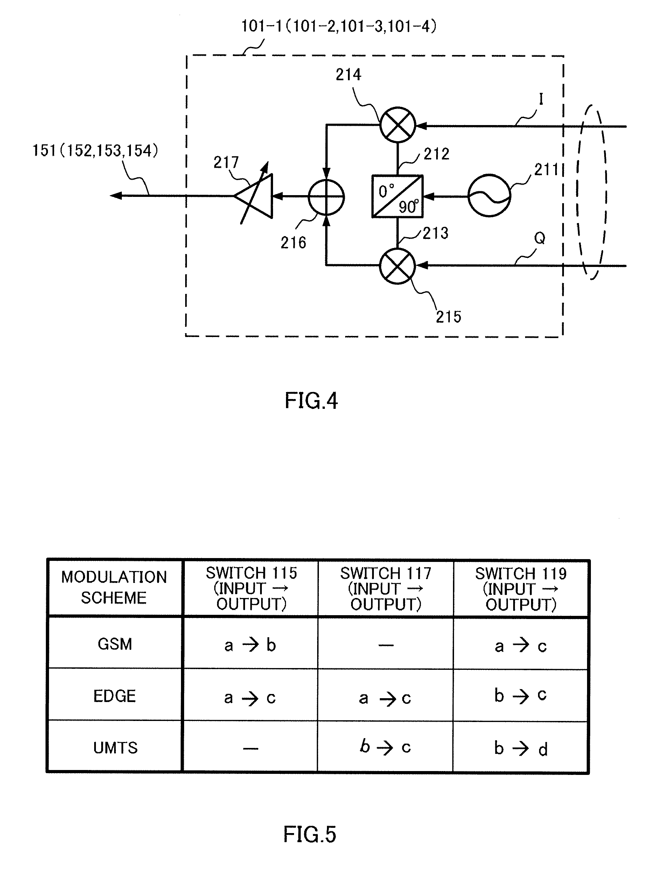

A configuration for each circuit 101-1 to 101-4 is shown in FIG.4. As the configuration is the same for each circuit 101-1 to 101-4, here, a description is given of a typical wireless GSM/EDGE (LB) signal formation circuit 101-1. In the case of transmitting an EDGE signal, wireless GSM/EDGE (LB) signal formation circuit 101-1 inputs an I signal and Q signal of a baseband EDGE signal from baseband EDGE signal formation circuit 120-2, and after multiplying these signals with two carrier waves 212 and 213 differing in phase by 90 degrees generated using oscillator 211 at multipliers 214 and 215, the signals are added at adder 216, and wireless GSM/EDGE (LB) signal 151 is obtained through amplification at variable amplifier 217. Wireless GSM/EDGE (LB) signal formation circuit 101-1 performs the same processing on baseband GSM signal from baseband GSM signal formation circuit 120-1.

In FIG.3, each circuit 101-1 to 101-4 is shown using a separate block, but basically each circuit 101-1 to 101-4 has the same orthogonal modulator configuration, and, for example, may be shared in an appropriate manner, for example, every frequency band, between different modulation schemes. A configuration using a phase modulation circuit employing a PLL is also possible for the GSM modulation scheme because the phase modulation signal has a constant envelope.

Next, a description is given of the operation of wireless transmission apparatus 200 of this embodiment. First, the operation of the high-frequency (UB) side is described.

Wireless GSM/EDGE (UB) signal 153 outputted from wireless GSM/EDGE (UB) signal formation circuit 101-3 is supplied to high-frequency power amplifier 104 at the time of a GSM signal output and is supplied to high-frequency power amplifier 105 at the time of an EDGE signal output by switch 115. Further, switch 117 selects and outputs either of the wireless EDGE signal or the wireless UMTS signal. Further, switch 119 outputs a wireless GSM signal outputted by high-frequency power amplifier 104 to low-pass filter 110 at the time of a GSM signal output, outputs wireless EDGE signal from high-frequency power amplifier 105 to low-pass filter 110 at the time of output of an EDGE signal, and outputs wireless UMTS signal outputted by high-frequency power amplifier 105 to duplexer 111 at the time of UMTS signal output.

In this way, at the time of EDGE signal output, returning of the wireless EDGE signal outputted by high-frequency power amplifier 105 to a path of from high-frequency power amplifier 105 side to high-frequency power amplifier 104 side is because the frequency bands of the EDGE modulation scheme and the UMTS modulation scheme are different. In the event that the same frequency band is used, the returning of the path may not always be necessary.

States of switching of switches 115, 117 and 119 during output (transmission) of signals for each modulation scheme described above are shown collectively in FIG.5.

Next, a description is given of the operation of the low-frequencyband (LB) side. At the low-frequency band (LB) side, a difference compared to the high-frequency band (UB) side described above is that there is no switching switch corresponding to the switch 119, with portions other than this having the same configuration as for the high-frequency band (UB) side described above. On the low-frequency band (LB) side, the frequency band is exactly the same for the EDGE modulation scheme and the UMTS modulation scheme . In this event, it is possible to use duplexer 109 as a transmitting and receiving switch for the EDGE modulation scheme and a switching switch corresponding to switch 119 is therefore not necessary.

According to the 3GPP standard, the output power occurring in each modulation scheme differs depending on the frequency band but the maximum output occurring, for example, in an EDGE modulation scheme (power class: E2) at an 850MHz band, a GSM modulation scheme (power class: 4) occurring at an 850MHz band, and a UMTS modulation scheme (powerclass: 3) for all frequency bands is 27dBm, 33dBm and 24dBm, respectively. The maximum output of the EDGE modulation scheme is therefore closer to the maximum output of the UMTS modulation scheme than the maximum output of the GSM modulation scheme.

Further, the maximum output of the EDGE modulation scheme is larger than for the UMTS modulation scheme. Therefore, by using the same high-frequency power amplifier 103 for the EDGE modulation scheme and the UMTS modulation scheme, use is possible in a state closer to the saturation output of high-frequency power amplifier 103 at the time of EDGE signal output and higher power efficiency is possible for the reasons described above using FIG.2.

As the EDGE modulation scheme is a modulation scheme where the envelope momentarily changes as with the UMTS modulation scheme, it is preferable to use a linear amplifier such as, for example, an A-class amplifier.

At wireless transmission apparatus 200 of this embodiment, with this point in mind, rather than subjecting the EDGE modulation signal to power amplification using a high-frequency power amplifier 102 optimally designed in line with the GSM modulation signal, linear high-frequency power amplifiers 103 and 105 are taken to be shared between the EDGE modulation signal and the UMTS modulation signal. As a result, it is possible to use a high-frequency power amplifier where there is little distortion and that is optimally designed with regards to power efficiency. Namely, high-frequency power amplifiers 102 and 104 for GSM modulation signal use are designed to operate in the saturation region and power efficiency is therefore extremely good.

As described above, according to this embodiment, a first high-frequency power amplifier 102 (104) for power amplifying a GSM modulation scheme wireless signal and a second high-frequency power amplifier 103 (105) for power amplifying wireless signals for an EDGE modulation scheme and a UMTS modulation scheme are provided. By then subjecting the EDGE modulation scheme wireless signal and the UMTS modulation scheme wireless signal to power amplification using the same high-frequency power amplifier 103 (105), it is possible to implement wireless transmission apparatus 200 capable of raising power efficiency at the time of transmission of an EDGE modulation scheme signal.

At wireless transmission apparatus 200 of the configuration of this embodiment, it is possible to increase power of high-frequency power amplifiers 103 and 105 by the order of 40% for the EDGE modulation signal so that even when taking into consideration power loss occurring at switches 114, 116, 115, 117 and 119 of the latter stage at the high-frequency band, this is extremely useful in bringing about a marked increase in power efficiency at the time of EDGE modulation signal output compared with schemes of the related art.

Further, high-frequency power amplifiers 102 and 104 are dedicated to use in GSM modulation schemes and can therefore be used only in non-linear regions (saturation regions). As a result, an isolator for suppressing the influence of load fluctuation of the power amplifier particularly necessary at the time of operation in the linear region can be eliminated. As a result, it is possible to miniaturize the apparatus accordingly and also reduce costs.

In the embodiment described above, a description is given of the case where the EDGE modulation signal is supplied to high-frequency power amplifier 103 (105) via switches 114 and 116 (switches 115 and 117) but a configuration where high-frequency power amplifiers amplifying the EDGE modulation signal are switched according to output power level of the EDGE modulation signal is also possible. This is because it becomes no longer possible to form a wireless signal for the EDGE modulation scheme of the desired output power level depending on the configuration conditions for high-frequency power amplifier 103 (105). Further, this is also because there are cases where the power loss due to switches 116 and 117 is greater than the extent of increase of power efficiency as a result of amplification of the EDGE modulation signal by high-frequency power amplifier 103 (105) . In this event, it is preferable for the EDGE modulation signal to be outputted at the side of high-frequency power amplifier 102 (104) via switch 114 (115).

The reason for this is now described. Maximum output for UMTS is usually smaller than maximum output for EDGE. Therefore, in the event that UMTS power efficiency is emphasized over EDGE power efficiency, high-frequency power amplifier 103 (105) is designed in such a manner that the maximum output of high-frequency power amplifier 103 (105) matches the maximum output of UMTS. In this event, regarding an EDGE signal output in excess of the maximum output of UMTS, it is not possible to obtain an EDGE modulation scheme wireless signal of the desired output power level at high-frequency power amplifier 103 (105) and high-frequency power amplifier 102 (104) is therefore used. As a result, it is therefore possible to form EDGE modulation scheme wireless signals using high-frequency power amplifier 102 (104) even in cases where high-frequency power amplifier 103 (105) is designed in such a manner that the maximum output power level of high-frequency power amplifier 103 (105) matches the maximum output power level of the UMTS modulation scheme wireless signal.

(Embodiment 2)

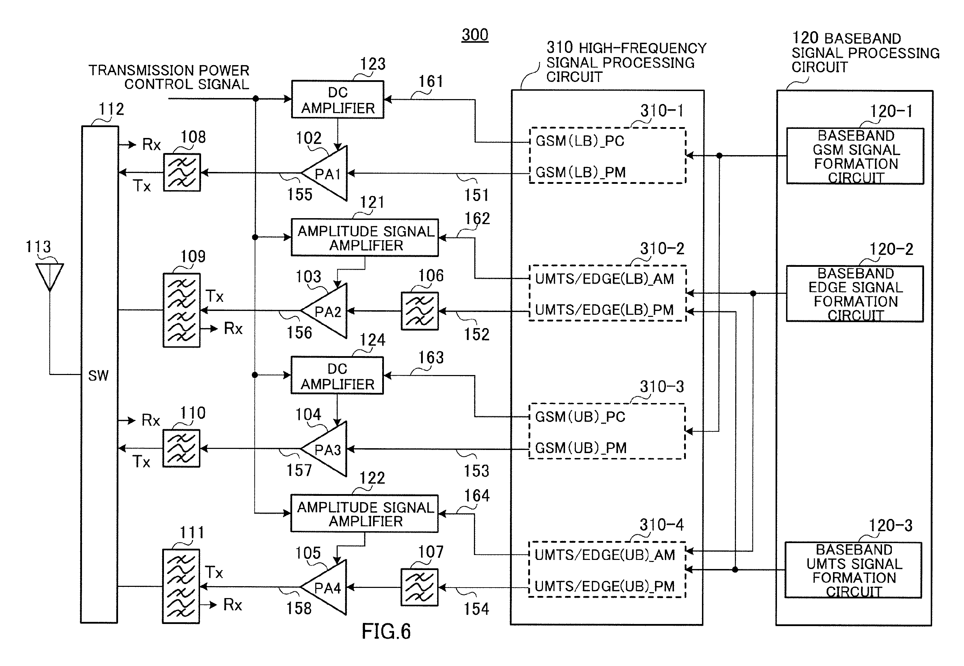

A configuration for a polar modulation transmission apparatus according to Embodiment 2 is shown in FIG.6, with portions corresponding to FIG. 3 being given the same reference numerals.

Polar modulation transmission apparatus 300 of this embodiment differs from wireless transmission apparatus 200 of Embodiment 1 with regards to the following two points.

The first point is that, whereas orthogonal modulation was carried out at high-frequency signal processing circuit 101 in Embodiment 1, in this embodiment, signal processing is carried out by high-frequency signal processing circuit 310 based on a polar modulation scheme.

The second point is that the transmission frequency range in this embodiment is such that the low-frequency band (LB) is 824 to 849 MHz, and the high-frequency band (UB) is 1850 to 1910 MHz (refer to 3GPP standard) for both GSM/EDGE and UMTS modulation schemes.

Polar modulation is a scheme of adding amplitude modulation by multiplying a high-frequency phase modulation signal obtained by extracting a baseband amplitude signal and phase signal from a baseband I signal and Q signal and modulating a carrier wave based on the phase signal with an amplitude component. Since operation of the high-frequency power amplifier in saturation mode is then possible, this modulation scheme is capable of modulation of high power efficiency and superior linearity. In this embodiment, multiplication of a high-frequency phase modulation signal and an amplitude component is carried out by high-frequency power amplifiers 102, 103, 104 and 105.

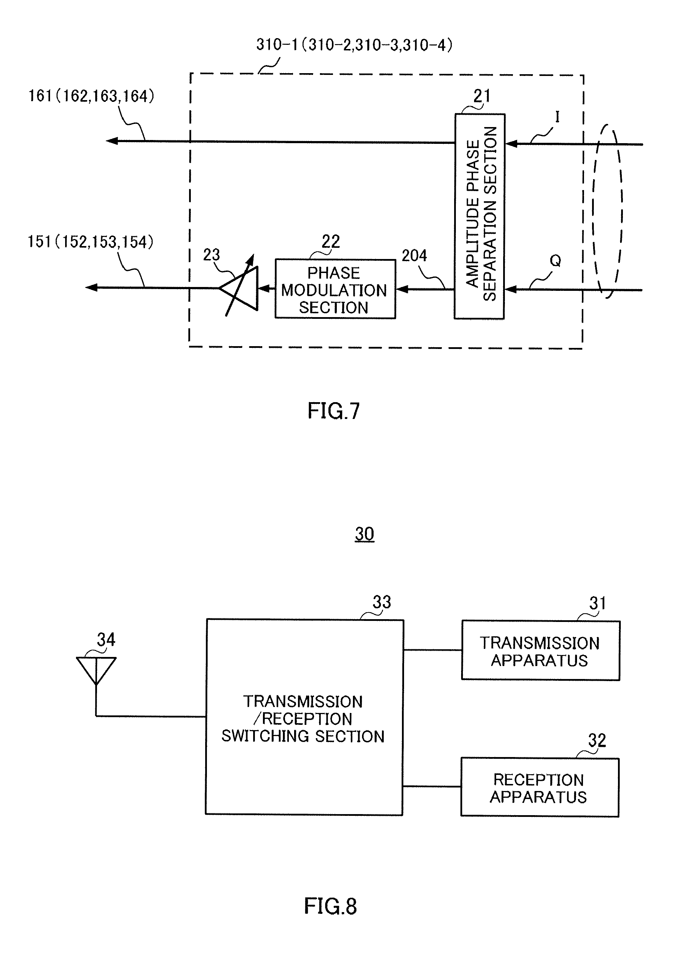

High-frequency signal processing circuit 310 has a plurality of processing units 310-1 to 310-4. The configuration of each of the processing units 310-1 to 310-4 is shown in FIG.7. As the configuration of each of processing units 310-1 to 310-4 is the same, a description is given here of a typical processing unit 310-2.

Processing unit 310-2 has an amplitude-phase separation section 21, a phase modulation section 22, and a variable gain amplifier 23. In the event of transmitting an EDGE signal, amplitude-phase separation section 21 inputs an I signal and Q signal of a baseband EDGE signal from baseband EDGE signal formation circuit 120-2, and forms amplitude signal 162 that is an amplitude component and phase signal 204 that is a phase component from this I signal and Q signal. Phase modulation section 22 forms high-frequency phase modulation signal 152 by modulating a carrier frequency signal using phase signal 204. Phase modulation section 22 is constructed from a variable controlled oscillator (VCO), phase comparator, and PLL circuit composed of a low-pass filter etc.

The GSM modulation scheme is a frequency (phase) modulation scheme and envelope level of a high-frequency modulation signal, i.e. the magnitude of an amplitude signal (GSM(LB)_PC, GSM(UB)_PC) 161 and 163 is a fixed value, but with the EDGE modulation scheme and UMTS modulation scheme, the envelope level, i.e. the magnitude of amplitude signals (UMTS/EDGE(LB)_AM, UMTS/EDGE(UB)_AM) 162 and 164 changes momentarily.

Regarding the EDGE modulation signal and UMTS modulation signal, amplitude signal (UMTS/EDGE (LB)_AM, UMTS/EDGE (UB)_AM) 162 and 164 are outputted from the output terminal of high-frequency signal processing circuit 310. In this embodiment, the amplitude signal output terminal is shared by the EDGE modulation signal and UMTS modulation signal each frequency band, with amplitude signal (UMTS/EDGE (LB)_AM) 162 and amplitude signal (UMTS/ EDGE (UB)_AM) 164 being outputted respectively from the same terminal.

Amplitude signals 162 and 164 outputted from high-frequency signal processing circuit 310 are inputted to the power supply terminals of high-frequency power amplifiers 103 and 105 after being amplified by amplifier signal amplifiers 121 and 122 according to the transmission power control signal. As a result, high-frequency phase modulation signals 152 and 154 and baseband amplitude signals 162 and 164 are multiplied at high-frequency power amplifiers 103 and 105.

Further, amplitude signals (GSM(LB)_PC, GSM(UB)_PC) 161 and 163 of fixed values are outputted from high-frequency signal processing circuit 310 for the GSM modulation signal. Amplitude signals 161 and 163 of fixed values are then amplified by DC (direct current) amplifiers 123 and 124 in accordance with a transmission power control signal before being inputted to power supply terminals of high-frequency power amplifiers 102 and 104. As a result, high-frequency phase modulation signals 151 and 153 and amplitude signals 161 and 163 are multiplied at high-frequency power amplifiers 102 and 104.

The transmission power control described above (specifically, multiplication of baseband amplitude signals 161 to 164 and the transmission power control signal) may also be carried out at high-frequency signal processing circuit 310 based on a control signal from baseband signal processing circuit 120.

At high-frequency signal processing circuit 310 of the polar modulation scheme of this embodiment, it ispossible to make amplifiers 123 and 124 direct current amplifiers by separation the GSMmodulation signal output terminal into an output terminal for an EDGE modulation signal and a UMTS modulation signal. As a result, this brings about what is referred to as the effects of polar modulation characteristics where design becomes straightforward because amplifiers 123 and 124 can be made to be narrow band.

Further, high-frequency phase modulation signals 151, 152, 153 and 154 are outputted from the output terminal of high-frequency signal processing circuit 310 every frequency and modulation scheme (the EDGE modulation signal and UMTS modulation signal share an output terminal).

With the polar modulation scheme, noise of the reception frequency band is frequency band-restricted by the low-pass filter etc. of phase modulation section 22 and a configuration where band pass filters 106 and 107 are deleted may therefore also be adopted. Further, in this embodiment, the transmission frequency range is the same for both the low-frequency band (LB) and the high-frequency band (UB) and the switching switch 119 used in Embodiment 1 is therefore not necessary.

Next, a description is given using equations of the operation of polar modulation transmission apparatus 300 of this embodiment.

When the baseband signal is taken to be Si (t) in complex notation, baseband signal Si(t) can be expressed by the following equation.

$$\mathrm{Si(t)=a(t)exp[j\varphi(t)]} \quad \ldots\ldots\ldots (1)$$

Where, a(t) indicates amplitude data, and exp[jφ(t)] indicates phase data, respectively.

Amplitude data a (t) and phase data exp [jφ (t)] can be extracted from Si (t) by amplitude-phase separation section 21.

Here, amplitude data a(t) corresponds to baseband amplitude signal 162 (161, 163 and 164), and phase data exp[jφ(t)] corresponds to baseband phase signal 152 (151, 153 and 154). Amplitude data a(t) relates to the EDGE modulation signal and UMTS modulation signal, and is amplified at amplitude signal amplifiers 121 and 122, and supplied to high-frequency power amplifiers 103 and 105. As a result, power supply voltage values of high-frequency power amplifiers 103 and 105 are set based on amplitude data a (t) . On the other hand, regarding the GSM modulation signal, the level of the envelope of the high-frequency modulation signal, i.e. the magnitude of the amplitude signal, is fixed. The power supply terminals of high-frequency power amplifiers 102 and 104 are therefore driven at fixed voltage values corresponding to the respective transmission powers.

Phase modulation section 22 generates high-frequency phase modulation signal 152 (151, 153, 154) by modulating carrier wave angular frequency ω c using phase data exp[jcp(t)]. High-frequency phase modulation signals 151 to 154 are then inputted to high-frequency power amplifiers 102 to 105. When high-frequency phase modulation signals 151 to 154 are then taken to be signal Sc, high-frequency phase modulation signal Sc can be expressed by the following equation.

$$\mathrm{Sc=exp[\omega ct+\varphi(t)]} \quad \ldots\ldots\ldots (2)$$

Transmission output signals that are power supply voltage values a(t) of high-frequency power amplifiers 102 to 105 multiplied by high-frequency phase modulation signals 151 to 154 by high-frequency power amplifiers 102 to 105 are then outputted from high-frequency power amplifiers 102 to 105.

When the transmission output signal is taken as RF signal Srf, Srf can be expressed by the following equation.

$$Srf = a(t)Sc = a(t)exp[\omega ct + \varphi(t)] \ldots\ldots\ldots (3)$$

In the above, at polar modulation transmission apparatus 300, signals inputted to high-frequency power amplifiers 102 to 105 constitute a constant envelope signal that is high-frequency phase modulation signals 151 to 154 that do not include fluctuation components of amplitude direction. Non-linear amplifiers with superior efficiency can therefore be used as high-frequency power amplifiers 102 to 105 and it is therefore possible to increase power efficiency.

Comparing wireless transmission apparatus 200 of Embodiment 1 and polar modulation transmission apparatus 300 of this embodiment from the point of view of power efficiency, high-frequency power amplifiers 102 and 104 subjecting GSM modulation signals to power amplification are also made to operate in the saturation region for wireless transmission apparatus 200 and a power efficiency of the same order can also be obtained for this embodiment. On the other hand, with high-frequency power amplifiers 103 and 105 that power amplify the UMTS modulation signal and the EDGE modulation signal, with regards to the linear operation made to occur at wireless transmission apparatus 200, saturation operation (non-linear operation) is made to take place at polar modulation transmission apparatus 300 of this embodiment and polar modulation transmission apparatus 300 of this embodiment therefore has superior power efficiency. Polar modulation transmission apparatus 300 of this embodiment is therefore capable of substantially improving power efficiency from that of wireless transmission apparatus 200 of Embodiment 1.

Further, in this embodiment, the high-frequency modulation signal output terminal of high-frequency signal processing circuit 310 shares an output terminal for the EDGE modulation signal and UMTS modulation signal and outputs the GSM modulation signal from a separate output terminal so that it is therefore not necessary to provide switching switches 114 to 117 of FIG.3. As a result, it is possible to simplify the structure of the apparatus and implement a low-cost apparatus.

With the GSM modulation signal, rather than extracting a phase signal from the baseband I signal and Q signal shown in FIG.7 via amplitude-phase separation section 21, a configuration can also be considered where the phase signal is received directly from baseband GSM signal formation circuit 120-1, is inputted as is to phase modulation section 22 without passing via amplitude-phase separation section 21, and is subjected to phase modulation. In this event, amplitude signals 161 and 163 in FIG.7 are fixed values but the same results as for the embodiments described above can be obtained in this case as well.

In FIG.6, each circuit 310-1 to 310-4 is shown using a separate block but basically each circuit 310-1 to 310-4 has the same polar modulator configuration, and, for example, may be shared in an appropriate manner, for example, every frequency band, between different modulation schemes.

(Other Embodiments)

In addition, it is possible to apply wireless transmission apparatus 200 of Embodiment 1 and polar modulation transmission apparatus 300 of Embodiment 2 to wireless communication apparatus. An outline of a configuration for wireless communication apparatus 30 mounted with wireless transmission apparatus 200 and polar modulation transmission apparatus 300 is shown in FIG.8. Wireless communication apparatus 30 has transmission apparatus 31 mounted with wireless transmission apparatus 200 and polar modulation transmission apparatus 300 and reception apparatus 32, that are connected to antenna 34 via transmission/reception switching section 33. Wireless communication apparatus 30 may be, for example, mobile wireless terminal apparatus such as a mobile information terminal equipped with a mobile telephone or communication function, or may be a wireless base station, etc.

Wireless communication apparatus 30 generates a transmission output signal amplified by transmission apparatus 31 at the time of transmission that is radiated from antenna 34 via transmission/reception switching section 33. On the other hand, at the time of receiving, a reception signal received by antenna 34 is inputted to reception apparatus 32 via transmission/reception switching section 33 and a reception signal is demodulated by reception apparatus 32.

In this way, according to wireless communication apparatus 30 mounted with wireless transmission apparatus 200 of Embodiment 1 or polar modulation transmission apparatus 300 of Embodiment 2, it is possible to improve power efficiency in an edge modulation scheme as a result of a high-frequency power amplifier being shared by an EDGE modulation scheme and UMTS modulation scheme. As a result, wasting of a battery can be prevented at mobile wireless terminal apparatus etc., and usage time of the transmission apparatus and communication apparatus can be extended by this amount. Further, a high-frequency power amplifier can be made smaller by the amount the power efficiency is increased by, and the calorific value can also be reduced. This also enables the wireless communication apparatus on which mounting takes place to be made smaller.

Moreover, if wireless transmission apparatus or polar modulation transmission apparatus of the present invention are applied to a base station of a wireless system where a plurality of large power transmission apparatus are installed, power efficiency at the time of high power output of the high-frequency power amplifier is increased, the high-frequency power amplifier can be made smaller, and calorific value can also be reduced. As a result, increase in size of the installation can be prevented and space conservation can be increased.

In the above embodiments, a description is given of the case of an EDGE modulation scheme, UMTS modulation scheme and GSM modulation scheme but the effects of the present invention are not only limited to these specific modulation schemes. In the event that the relationship of the magnitude of the maximum output power value and the relationship of the presence or absence of envelope fluctuations due to the modulation scheme exist as the relationships described above, the modulation schemes for the embodiments described above are not limiting, and application of the present invention is possible.

Further, the frequency bands for each modulation scheme are not limited to the frequency bands described in the embodiments and it is possible to obtain the same advantage as a result of a high-frequency power amplifier being shared by the UMTS modulation scheme and the EDGE modulation scheme.

The present invention is not limited to the above described embodiments, and various variations and modifications may be possible without departing from the scope of the present invention.

This application is based on Japanese Patent Application No.2005-130538 filed on April 27, 2005, entire content of which is expressly incorporated by reference herein.

Industrial Applicability

The present invention is capable of improving power efficiency in multi-mode compatible wireless transmission apparatus, and suitable for use as mobile terminals such as mobile telephones and mobile information terminals, wireless communication apparatus such as base station.

**Claims**

1. A wireless transmission apparatus that power amplifies and wirelessly transmits GSM modulation scheme, EDGE modulation scheme and UMTS modulation scheme signals, comprising:

   a high-frequency signal processing circuit that forms GSM modulation scheme, EDGE modulation scheme, and UMTS modulation scheme wireless signals;
   a first high-frequency power amplifier that power amplifies the GSM modulation scheme wireless signal; and
   a second high-frequency power amplifier that power amplifies the UMTS modulation scheme and the EDGE modulation scheme wireless signals.

2. The wireless transmission apparatus according to claim 1, wherein:

   the first high-frequency power amplifier is made to perform an amplification operation in a non-linear region; and
   the second high-frequency power amplifier is made to perform an amplification operation in a linear region.

3. The wireless transmission apparatus according to claim 1, wherein the high-frequency power amplifier that power amplifies the EDGE modulation scheme wireless signal is switched from the second high-frequency power amplifier to the first high-frequency power amplifier according to the output power level of the wireless signal of the EDGE modulation scheme outputted from the second high-frequency power amplifier.

4. The wireless transmission apparatus according to claim 1, wherein:

   a high-frequency modulation signal output terminal of the high-frequency signal processing circuit is shared by the GSM modulation signal and the EDGE modulation signal; and
   the UMTS modulation signal is outputted from a separate output terminal.

5. The wireless transmission apparatus according to claim 1, wherein:

   a high-frequency modulation signal output terminal of the high-frequency signal processing circuit is configured to be shared by a GSM modulation signal and an EDGE modulation signal, and an UMTS modulation signal is outputted from a separate output terminal, and the wireless transmission apparatus further comprises:

   a first switch, that inputs a signal outputted from the shared output terminal for the GSM modulation signal and the EDGE modulation signal, and outputs the GSM modulation signal to the first high-frequency power amplifier side and outputs the EDGE modulation signal to the second high-frequency power amplifier side; and

a second switch, that inputs the UMTS modulation signal outputted by an output terminal separate from the shared output terminal and the EDGE modulation signal outputted by the first switch, and selects either one of the modulation signals for output to the second high-frequency power amplifier.

6. The wireless transmission apparatus according to claim 3, wherein:

a high-frequency modulation signal output terminal of the high-frequency signal processing circuit is configured to be shared by the GSM modulation signal and the EDGE modulation signal, and the UMTS modulation signal is outputted from a separate output terminal, and the wireless transmission apparatus further comprises:

a first switch, that inputs a signal outputted from the shared output terminal for the GSM modulation signal and the EDGE modulation signal, and outputs the GSM modulation signal to the first high-frequency power amplifier side and selectively outputs the EDGE modulation signal to the first high-frequency power amplifier side or the second high-frequency power amplifier side; and

a second switch, that inputs the UMTS modulation signal outputted by an output terminal separate from the shared output terminal and the EDGE modulation signal outputted by the first switch, and selects either one of the modulation signals for output to the second high-frequency power amplifier.

7. The wireless transmission apparatus according to claim 1, further comprising:

an output switching switch connected to a latter stage of the first and second high-frequency power amplifiers;
a duplexer connected to the latter stage of the output switching switch; and
a low-pass filter connected to the latter stage of the output switching switch,

wherein the output switching switch inputs output signals of the first and second high-frequency power amplifiers, and outputs the output signal to the duplexer or the low-pass filter according to the modulation scheme of the output system.

8. A polar modulation transmission apparatus comprising:

a high-frequency signal processing circuit that forms amplitude signals and high-frequency phase modulation signals for signals of each of the modulation schemes from GSM modulation scheme, EDGE modulation scheme, and UMTS modulation scheme baseband signals;
a first high-frequency power amplifier that takes a voltage corresponding to the amplitude signal of the GSM modulation scheme signal as a power supply voltage and power amplifies a high-frequency phase modulation signal for the GSM modulation scheme signal;
a second high-frequency power amplifier that takes a voltage corresponding to the amplitude signals of the UMTS modulation scheme and EDGE modulation scheme signals as a power supply voltage and power amplifies a high-frequency phase modulation signal for the UMTS modulation scheme and EDGE modulation scheme signals.

9. The wireless transmission apparatus according to claim 8, wherein the high-frequency power amplifier that power amplifies the EDGE modulation scheme high-frequency phase modulation signal is switched from the second high-frequency power amplifier to the first high-frequency power amplifier according to the output power level of the high-frequency phase modulation signal of the EDGE modulation scheme outputted from the second high-frequency power amplifier.

10. A wireless communication apparatus comprising:

the wireless transmission apparatus according to claim 1;
a reception apparatus that demodulates a reception signal;
an antenna; and
a transmission/reception switching section switching between supplying a transmission signal from the wireless transmission apparatus to the antenna, and supplying a reception signal from the antenna to the reception apparatus.

**11.** A wireless communication apparatus comprising:

the polar modulation transmission apparatus according to claim 8;
a reception apparatus that demodulates a reception signal;
an antenna; and
a transmission/reception switching section switching between supplying a transmission signal from the wireless transmission apparatus to the antenna, and supplying a reception signal from the antenna to the reception apparatus.

(PRIOR ART)
FIG.1

EP 1 865 606 A1

(PRIOR ART)

FIG.2

120 BASEBAND SIGNAL PROCESSING CIRCUIT

120-1 BASEBAND GSM SIGNAL FORMATION CIRCUIT

120-2 BASEBAND EDGE SIGNAL FORMATION CIRCUIT

120-3 BASEBAND UMTS SIGNAL FORMATION CIRCUIT

101 HIGH-FREQUENCY SIGNAL PROCESSING CIRCUIT

101-1 WIRELESS GSM/EDGE (LB) SIGNAL FORMATION CIRCUIT

101-2 WIRELESS UMTS (LB) SIGNAL FORMATION CIRCUIT

101-3 WIRELESS GSM/EDGE (UB) SIGNAL FORMATION CIRCUIT

101-4 WIRELESS UMTS (UB) SIGNAL FORMATION CIRCUIT

200

114 SW a b c 151

106 152

115 SW a b c 153

107 154

116 SW a b c 152

117 SW a b c 154

102 PA1 155

103 PA2 156

104 PA3 157

105 PA4 158

119 SW a b c d

108 Rx Tx

109 Tx Rx

110 Rx Tx

111 Tx Rx

112 SW

113

FIG.3

101-1(101-2,101-3,101-4)

FIG.4

| MODULATION SCHEME | SWITCH 115 (INPUT → OUTPUT) | SWITCH 117 (INPUT → OUTPUT) | SWITCH 119 (INPUT → OUTPUT) |
|---|---|---|---|
| GSM | a → b | — | a → c |
| EDGE | a → c | a → c | b → c |
| UMTS | — | b → c | b → d |

FIG.5

17

FIG.6

TRANSMISSION POWER CONTROL SIGNAL

300

310 HIGH-FREQUENCY SIGNAL PROCESSING CIRCUIT

120 BASEBAND SIGNAL PROCESSING CIRCUIT

123 DC AMPLIFIER

161

310-1

GSM(LB)_PC
GSM(LB)_PM

120-1 BASEBAND GSM SIGNAL FORMATION CIRCUIT

112

108

Rx
Tx

102

PA1

155

151

121 AMPLITUDE SIGNAL AMPLIFIER

162

310-2

UMTS/EDGE(LB)_AM
UMTS/EDGE(LB)_PM

120-2 BASEBAND EDGE SIGNAL FORMATION CIRCUIT

113

109

Tx
Rx

103

PA2

156

106

152

124 DC AMPLIFIER

163

310-3

GSM(UB)_PC
GSM(UB)_PM

SW

110

Rx
Tx

104

PA3

157

153

122 AMPLITUDE SIGNAL AMPLIFIER

164

310-4

UMTS/EDGE(UB)_AM
UMTS/EDGE(UB)_PM

120-3 BASEBAND UMTS SIGNAL FORMATION CIRCUIT

111

Tx
Rx

105

PA4

158

107

154

EP 1 865 606 A1

18

310-1(310-2,310-3,310-4)

161(162,163,164)

151(152,153,154)

21

AMPLITUDE PHASE SEPARATION SECTION

I

Q

22

PHASE MODULATION SECTION

204

23

**FIG.7**

30

34

33

TRANSMISSION /RECEPTION SWITCHING SECTION

31

TRANSMISSION APPARATUS

32

RECEPTION APPARATUS

**FIG.8**

## INTERNATIONAL SEARCH REPORT

| | International application No. |
|---|---|
| | PCT/JP2006/308440 |

**A. CLASSIFICATION OF SUBJECT MATTER**
*H04B1/04*(2006.01), *H04Q7/38*(2006.01)

According to International Patent Classification (IPC) or to both national classification and IPC

**B. FIELDS SEARCHED**

Minimum documentation searched (classification system followed by classification symbols)
H04B1/04, H04Q7/38

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2004-526343 A (Motorola, Inc.),<br>26 August, 2004 (26.08.04),<br>Par. No. [0001]<br>& US 2004-37379 A1    & EP 1213830 A1<br>& WO 2002-47247 A1    & DE 60005030 D<br>& DE 60005030 T    & AU 2355102 A<br>& AT 249108 T    & CN 1479967 T<br>& CN 1479967 A | 1,2,8,10,11<br>3-8,9 |
| Y<br>A | JP 2003-152565 A (Matsushita Electric<br>Industrial Co., Ltd.),<br>23 May, 2003 (23.05.03),<br>Par. No. [0043]<br>(Family: none) | 1,3,8,10,11<br>3-7,9 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 June, 2006 (15.06.06) | 27 June, 2006 (27.06.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**EP 1 865 606 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005130538 A